(19) **Europäisches Patentamt / European Patent Office / Office européen des brevets**

(11) **EP 4 343 575 A1**

(12) # EUROPEAN PATENT APPLICATION
published in accordance with Art. 153(4) EPC

(43) Date of publication:
**27.03.2024 Bulletin 2024/13**

(21) Application number: **22803589.5**

(22) Date of filing: **23.02.2022**

(51) International Patent Classification (IPC):
**G06F 16/29** *(2019.01)*

(52) Cooperative Patent Classification (CPC):
**G06T 17/005; G06F 17/17; G06T 17/05;**
**G06T 2210/56**

(86) International application number:
**PCT/CN2022/077533**

(87) International publication number:
**WO 2022/242259 (24.11.2022 Gazette 2022/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.05.2021 CN 202110536213**

(71) Applicant: **Beijing CHJ Information Technology Co., Ltd.**
**Beijing 101399 (CN)**

(72) Inventors:
• **XIONG, Chao**
  **Beijing 101399 (CN)**
• **WU, Wei**
  **Beijing 101399 (CN)**
• **ZHU, Zhen**
  **Beijing 101399 (CN)**

(74) Representative: **advotec.**
**Patent- und Rechtsanwaltspartnerschaft**
**Tappe mbB**
**Widenmayerstraße 4**
**80538 München (DE)**

(54) **DATA PROCESSING METHOD AND APPARATUS, DEVICE, AND MEDIUM**

(57)    The present disclosure relates to a data processing method and apparatus, a device, and a medium. The data processing method comprises: obtaining a point sequence comprising a plurality of coordinate points; interpolating the point sequence and using the interpolated point sequence to build a multi-dimensional data structure tree; thinning the point sequence and interpolating the thinned point sequence to obtain a first point sequence; and obtaining the elevation of the first point sequence according to the multi-dimensional data structure tree and the first point sequence.

acquiring a point sequence including a plurality of coordinate points — S210

interpolating the point sequence, and constructing a multi-dimensional data structure tree by using the interpolated point sequence — S220

obtaining a first point sequence by thinning the point sequence and interpolating the thinned point sequence — S230

obtaining elevations of the first point sequence based on the multi-dimensional data structure tree and the first point sequence — S240

FIG. 2

EP 4 343 575 A1

**Description**

**CROSS-REFERENCE TO RELATED APPLICATIONS**

This application is based on and claims priority to Chinese Patent Application No. 202110536213.6, filed on May 17, 2021, the entire contents of which are incorporated herein by reference.

**TECHNICAL FIELD**

The present disclosure relates to a field of electronic information technologies, and particularly to a method and an apparatus for data processing, a device and a medium.

**BACKGROUND**

Nowadays, geographic information systems are widely applied. There is a large amount of spatial geographic data, and a lot of duplicated data. Therefore, geographic data often needs to be thinned before used, and features of the geographic data are maintained to a certain extent.
A curve thinning algorithm (Douglas-Peucker) is usually adopted for thinning. Coordinate points included in the geographic data are three-dimensional data, which are manifested as a sharply fluctuating curve in a three-dimensional space. However, the fluctuating curve will be thinned as a straight line by using the existing technology, thereby losing elevation information in the geographic data, resulting in inaccurate geographic data after thinning, and further errors may occur when the geographic data is processed.

**SUMMARY**

In order to solve the above technical problem or at least partially solve the above technical problem, a method and an apparatus for data processing, a device and a medium are provided in the disclosure.
According to a first aspect, a method for data processing is provided in embodiments of the present disclosure, and includes:

acquiring a point sequence including a plurality of coordinate points;
interpolating the point sequence, and constructing a multi-dimensional data structure tree by using the interpolated point sequence;
obtaining a first point sequence by thinning the point sequence and interpolating the thinned point sequence; and
obtaining elevations of the first point sequence based on the multi-dimensional data structure tree and the first point sequence.

Optionally, interpolating the point sequence, and constructing the multi-dimensional data structure tree by using the interpolated point sequence includes:

performing linear interpolation based on the coordinate points in the point sequence; and
constructing the multi-dimensional data structure tree based on the coordinate points in the interpolated point sequence.

Optionally, performing linear interpolation based on the coordinate points in the point sequence includes:

calculating a Euclidean distance between any two coordinate points in the point sequence;
obtaining an interpolation number based on the Euclidean distance and a preset density; and
generating the interpolated point sequence based on the interpolation number and the any two coordinate points in the point sequence.

Optionally, obtaining the interpolation number based on the Euclidean distance and the preset density includes: obtaining an interpolation number of coordinate points to be interpolated in the point sequence based on a product of the Euclidean distance and the preset density.
Optionally, generating the interpolated point sequence based on the interpolation number and the any two coordinate points in the point sequence includes:

obtaining coordinate points to be interpolated corresponding to the interpolation number based on a difference value between the any two coordinate points in the point sequence and the interpolation number; and
generating the interpolated point sequence based on the coordinate points to be interpolated and the coordinate points in the point sequence.

Optionally, constructing the multi-dimensional data structure tree based on the coordinate points in the interpolated point sequence includes:

calculating a median of the coordinate points in the interpolated point sequence; and
generating the multi-dimensional data structure tree by dividing the coordinate points in the point sequence into two regions based on the median until it is unable to determine a region for the coordinate points in the point sequence.

Optionally, thinning the point sequence specifically includes:

constructing a straight line between a minimum coordinate point and a maximum coordinate point in the point sequence;
counting distances between the coordinate points in the point sequence and the straight line, and determining a maximum distance; and
determining whether the maximum distance is greater than a preset threshold, and if yes, retaining a coordinate point corresponding to the maximum distance; if not, retaining a coordinate point corresponding to the straight line in the point sequence.

Optionally, obtaining the elevations of the first point sequence based on the multi-dimensional data structure tree and the first point sequence includes:

for any one coordinate point in the first point sequence, determining a preset number of coordinate points close to the coordinate point in the multi-dimensional data structure tree;
determining weights corresponding to sub-coordinate points in the preset number of coordinate points based on the coordinate point and the sub-coordinate points; and
obtaining an elevation of the coordinate point based on the weights corresponding to the sub-coordinate points and elevations corresponding to the sub-coordinate points.

Optionally, determining the weights corresponding to the sub-coordinate points in the preset number of coordinate points based on the coordinate point and the sub-coordinate points includes:

calculating difference values between the coordinate point and the sub-coordinate points in the preset number of coordinate points, and mapping the difference values to weights; and
determining the weights corresponding to the sub-coordinate points by performing normalization on the weights.

Optionally, obtaining the elevation of the coordinate point based on the weights corresponding to the sub-coordinate points and the elevations corresponding to the sub-coordinate points includes:
obtaining the elevation of the coordinate point by calculating products of the weights corresponding to the sub-coordinate points and the elevations corresponding to the sub-coordinate points and counting a sum of the products.

According to a second aspect, an apparatus for data processing is provided in embodiments of the present disclosure, and includes:

an acquiring module, configured to acquire a point sequence including a plurality of coordinate points;
a first processing module, configured to interpolate the point sequence, and construct a multi-dimensional data structure tree by using the interpolated point sequence;
a second processing module, configured to obtain a first point sequence by thinning the point sequence and interpolating the thinned point sequence; and
a calculation module, configured to obtain elevations of the first point sequence based on the multi-dimensional data structure tree and the first point sequence.

Optionally, the first processing module is specifically configured to: perform linear interpolation based on the coordinate points in the point sequence; and construct the multi-dimensional data structure tree based on the coordinate points in the interpolated point sequence.
Optionally, the second processing module is specifically configured to: construct a straight line between a minimum coordinate point and a maximum coordinate point in the point sequence; count distances between the coordinate points in the point sequence and the straight line, and determine a maximum distance; and determine whether the maximum distance is greater than a preset threshold, and if yes, retain a coordinate point corresponding to the maximum distance; if not, retain a coordinate point corresponding to the straight line in the point sequence.

According to a third aspect, a device for data processing is provided in embodiments of the present disclosure, and includes:

a memory;
a processor; and
a computer program stored in the memory;
in which the computer program is configured to be executed by the processor to implement the method for data processing.

According to a fourth aspect, a computer-readable storage medium having a computer program stored thereon is provided in embodiments of the present disclosure. When the computer program is executed by a processor, steps of the method for data processing are implemented.

According to a fifth aspect, a computer program product including instructions is provided in embodiments of the present disclosure. When the instructions are executed by a processor of an electronic device, the electronic device is caused to perform steps of the method for data processing.

A method and an apparatus for data processing, a device and a medium are provided in embodiments of the present disclosure. A point sequence including a plurality of coordinate points is acquired; the point sequence is interpolated, and a multi-dimensional data structure tree is constructed by using the interpolated point sequence; a first point sequence is obtained by thinning the point sequence and interpolating the thinned point sequence; and elevations corresponding to all coordinate points in the first point sequence are obtained based on the multi-dimensional data structure tree and the first point sequence. In the method for data processing, the point sequence is interpolated, a multi-dimensional data structure tree is constructed by using the interpolated point sequence, and a first point sequence is obtained by thinning the original point sequence and interpolating the thinned point sequence, and elevation information of each coordinate point in the first point sequence is calculated based on the multi-dimensional data structure tree, to complete data thinning, which effectively reduces a storage space of data, ensures elevation information in the thinned point sequence to a maximum extent, and smooths the elevation information, with a fast calculation speed and a high data processing efficiency.

## BRIEF DESCRIPTION OF THE DRAWINGS

The drawings herein are incorporated into the specification and constitute a part of the specification, show embodiments in conformity with embodiments of the present disclosure, and explain the principle of the present disclosure together with the specification.

In order to explain the technical solutions in embodiments of the present disclosure or in the related art more clearly, the drawings described in the embodiments or the related art will be briefly introduced below. Obviously, those skilled in the art may obtain other drawings based on the drawings without any creative work.

FIG. 1 is a diagram illustrating an application scenario provided in embodiments of the present disclosure.
FIG. 2 is a flowchart illustrating a method for data processing provided in embodiments of the present disclosure.
FIG. 3 is a flowchart illustrating a method for data processing provided in embodiments of the present disclosure.
FIG. 4 is a flowchart illustrating a method for data processing provided in embodiments of the present disclosure.
FIG. 5 is a plan view illustrating a multi-dimensional data structure tree provided in embodiments of the present disclosure.
FIG. 6 is a flowchart illustrating a method for data processing provided in embodiments of the present disclosure.
FIG. 7 is a flowchart illustrating a method for data processing provided in embodiments of the present disclosure.
FIG. 8 is a diagram illustrating a result of a method for data processing provided in embodiments of the present disclosure.
FIG. 9 is a diagram illustrating a structure of an apparatus for data processing provided in embodiments of the present disclosure.
FIG. 10 is a diagram illustrating a structure of a device for data processing provided in embodiments of the present disclosure.

## DETAILED DESCRIPTION

In order to understand the above purpose, features and advantages of the present disclosure more clearly, embodiments of the present disclosure may be further described below. It should be noted that, embodiments of the present disclosure may be combined with features in the embodiments without conflict.

Numerous specific details are set forth in the following description to facilitate a thorough understanding of the present disclosure. However, the present disclosure may also be implemented in other different ways than those described herein; obviously, embodiments in the specification are only a part of embodiments of the present disclosure rather than all embodiments.

In the related art, in the field of a geographic information system (GIS), it is often necessary to thin geographic data. Since the obtained GIS data has a large error in an elevation direction, the GIS data are generally thinned by using a curve thinning algorithm in a two-dimensional space. However, data in many geographic coordinate systems is mostly curves in a three-dimensional space, which are projected as straight lines on an XOY plane, with sharp fluctuation on a Z axis. Therefore, the fluctuating curves will be pulled into straight lines by directly thinning the GIS data, which may easily result in loss of elevation information in GIS data.

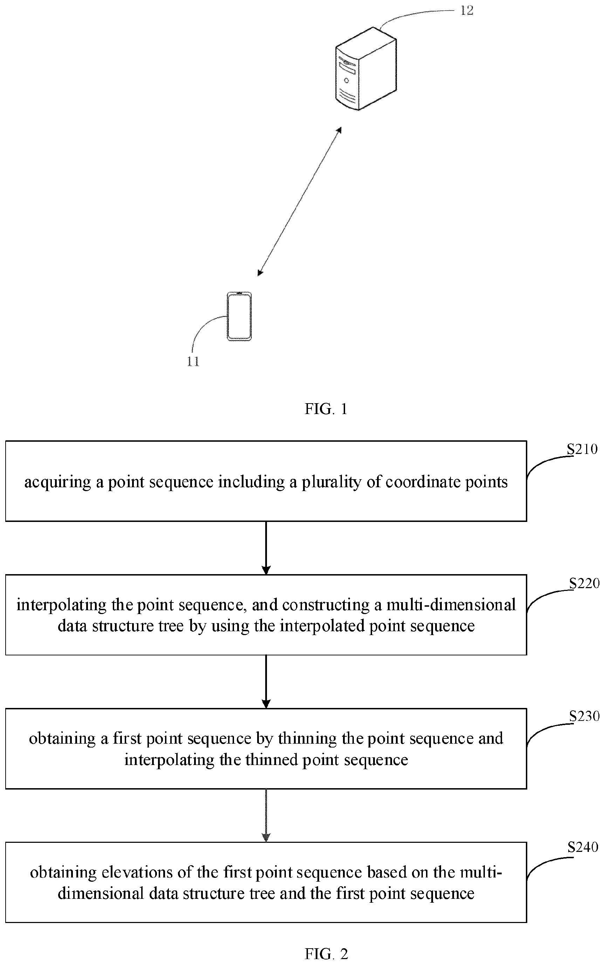

Specifically, FIG. 1 is a diagram illustrating an application scenario provided in embodiments of the present disclosure. The embodiment is applicable to data processing by a terminal 11. The method may be performed by an apparatus for data processing. The apparatus may be implemented by using a software and/or a hardware, and may be configured in an electronic device such as the terminal 11. The terminal specifically includes a smart phone, a palmtop, a tablet computer, a laptop computer, an all-in-one, or a vehicle smart terminal, etc. Alternatively, the embodiments are applicable to data processing in a server 12. The method may be performed by an apparatus for data processing. The apparatus may be implemented by using a software and/or a hardware, and may be configured in a server 12.

FIG. 2 is a flowchart illustrating a method for data processing provided in embodiments of the present disclosure, and a data processing may be specifically performed by a terminal 11 or a server 12. Taking the server 12 performing the data processing for example, the following embodiments are illustrated. It may be understood that, the method for data processing is similarly applicable to a scenario where the terminal 11 performs a data processing, and includes steps S210 to S240 in FIG. 2.

At S210, a point sequence including a plurality of coordinate points is acquired.

It may be understood that a point sequence in a universal transverse Mercator (UTM) grid system may be acquired, and the point sequence includes a plurality of coordinate points. The coordinate points are three-dimensional data, and include latitude and longitude information and elevation information.

At S220, the point sequence is interpolated, and a multi-dimensional data structure tree is constructed by using the interpolated point sequence.

Optionally, interpolating the point sequence, and constructing the multi-dimensional data structure tree by using the interpolated point sequence includes: performing linear interpolation based on the coordinate points in the point sequence; and constructing the multi-dimensional data structure tree based on the coordinate points in the interpolated point sequence.

It may be understood that, on the basis of the above S210, the linear interpolation is performed based on the coordinate points in the obtained point sequence, and the multi-dimensional data structure tree (K-D tree) is constructed by using the coordinate points in the interpolated point sequence, and a number of coordinate points included in the interpolated point sequence is greater than that of an un-interpolated point sequence. The multi-dimensional data structure tree refers to a K-D tree (an abbreviation of a K-dimensional tree), which is a data structure that divides a K-dimensional data space. It is mainly applied in search of key data in a multi-dimensional space, and for example, a range search and a nearest neighbor search may be performed by using a multi-dimensional data structure tree. The K-D tree may be understood as a special case of a binary space partitioning tree.

At S230, a first point sequence is obtained by thinning the point sequence and interpolating the thinned point sequence.

It is understandable that, on the basis of the above S220, an original point sequence obtained at the beginning may be thinned by using a data thinning algorithm, and a linear interpolation may be performed on the thinned point sequence, in which the interpolation method used is not limited. However, the same interpolation method needs to be adopted to interpolate the thinned point sequence and the original point sequence to obtain the first point sequence processed with the thinning and interpolation. It may be understood that, the first point sequence is obtained after thinning and interpolation, and the multi-dimensional data structure tree is constructed by interpolating the original point sequence.

At S240, elevations of the first point sequence are obtained based on the multi-dimensional data structure tree and the first point sequence.

It may be understood that, on the basis of the above S220 and S230, elevations of all coordinate points in the first point sequence are obtained based on the multi-dimensional data structure tree and the first point sequence. The first point sequence includes coordinate points retained after the original point sequence is thinned and coordinate points generated after interpolation. The elevation refers to a height of a certain point relative to a datum plane.

A method for data processing is provided in the embodiments of the present disclosure. A point sequence including a plurality of coordinate points is acquired; the point sequence is interpolated, and a multi-dimensional data structure tree is constructed by using the interpolated point sequence; a first point sequence is obtained by thinning the point sequence and interpolating the thinned point sequence; and elevations corresponding to all coordinate points in the first point sequence are obtained based on the multi-dimensional data structure tree and the first point sequence. In the method for data processing, the point sequence is interpolated, and a multi-dimensional data structure tree is constructed by using the interpolated point sequence, and a first point sequence is obtained by thinning the original point sequence and interpolating the thinned point sequence; and elevation information of each coordinate point in the first point sequence is calculated based on the multi-dimensional data structure tree, to complete data thinning processing, which effectively reduces a storage space of data, ensures elevation information in the thinned point sequence to a maximum extent, and performs smooth processing on the elevation information, with a fast calculation speed and a high data processing efficiency.

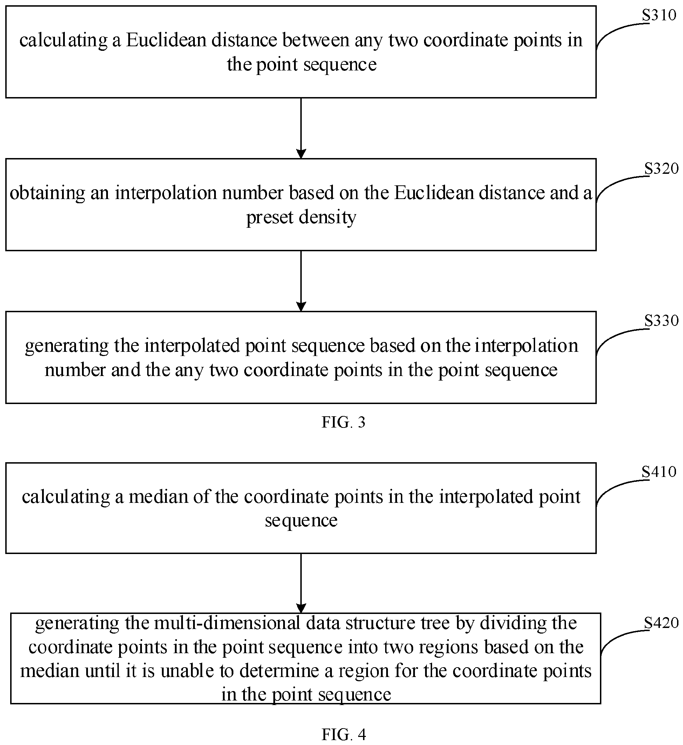

On the basis of the above embodiments, FIG. 3 is a flowchart illustrating a method for data processing provided in embodiments of the present disclosure. Optionally, performing linear interpolation on the coordinate points in the point sequence includes steps S310 to S330 as illustrated in FIG. 3.

At S310, a Euclidean distance between any two coordinate points in the point sequence is calculated.

It may be understood that, calculating the Euclidean distance between the any two coordinate points in an original point sequence, may be calculating the Euclidean distance in a two-dimensional space between the any two coordinate points in the point sequence. A calculation equation of the Euclidean distance may be the following equation (1):

$$d = \sqrt{(x_2 - x_1)^2 + (y_2 - y_1)^2} \tag{1}$$

where, d represents the Euclidean distance, any two coordinate points in the point sequence are $A(x_1,y_1,z_1)$ and $B(x_2, y_2,z_2)$, and only the Euclidean distance in a two-dimensional space between the any two coordinate points in the point sequence is calculated, that is, the Euclidean distance between x and y.

At S320, an interpolation number is obtained based on the Euclidean distance and a preset density.

Optionally, obtaining the interpolation number based on the Euclidean distance and the preset density includes: obtaining an interpolation number of coordinate points to be interpolated in the point sequence based on a product of the Euclidean distance and the preset density.

It may be understood that, on the basis of S310, the interpolation number is obtained based on a product of the Euclidean distance between the any two coordinate points in the original point sequence and the preset density. The preset density may be an interpolation of 4 points per meter, and the interpolation number is an integer. The interpolation number refers to a number of coordinate points that may be interpolated in the any two coordinate points $A(x_1,y_1,z_1)$ and $B(x_2,y_2,z_2)$ in the original point sequence. A calculation equation of the interpolation number may be the following equation (2):

$$num = \text{int}(d * k) \tag{2}$$

where, num is the interpolation number, d is the Euclidean distance between two coordinate points $A(x_1,y_1,z_1)$ and $B(x_2,y_2,z_2)$, and k is the preset density.

At S330, an interpolated point sequence is generated based on the interpolation number and the any two coordinate points in the point sequence.

Optionally, generating the interpolated point sequence based on the interpolation number and the any two coordinate points in the point sequence includes: obtaining coordinate points to be interpolated corresponding to the interpolation number based on a difference value between the any two coordinate points in the point sequence and the interpolation number; and generating the interpolated point sequence based on the coordinate points to be interpolated and the coordinate points in the point sequence.

It may be understood that, on the basis of the above S320, the difference value of the two-dimensional space between the any two coordinate points in the original point sequence is calculated, and each coordinate point to be interpolated is calculated based on the difference value and the interpolation number, the number of the coordinate points to be interpolated being same as the interpolation number, that is, each coordinate point to be interpolated in the interpolation number is calculated, and the calculated coordinate point to be interpolated may exist between the any two coordinate points in the original point sequence, or may be around the two coordinate points, and each coordinate point to be interpolated in the interpolation number and the corresponding original point sequence are stored to obtain the interpolated point sequence. A calculation equation of each coordinate point to be interpolated in the interpolation number, i.e., an equation for calculating the interpolation number of coordinate points, is as shown in an equation (3):

$$\begin{cases} x = (x_2 - x_1) * i / (num + 1) \\ y = (y_2 - y_1) * i / (num + 1) \quad , i = 1, 2, \mathrm{L} \; num \\ z = (z_2 - z_1) * i / (num + 1) \end{cases} \tag{3}$$

where, i represents an i-th point in an interpolation number num, x, y and z are calculated by the interpolation number and any two coordinate points A and B in the point sequence, and are three-dimensional data of the i-th coordinate point in the interpolation number, that is, each coordinate point to be interpolated is calculated, and the number of all calculated coordinate points to be interpolated is same as the interpolation number.

For example, two-dimensional spaces of A and B in the any two coordinate points $A(x_1, y_1, z_1)$ and $B(x_2, y_2, z_2)$ in the original point sequence are (1, 2, 3) and (3, 4, 5), the calculated Euclidean distance d is 2.828, and the interpolation number num is 8, that is, 8 coordinate points may be inserted in the original point sequence based on the original point sequences A and B, in which a first coordinate point of the 8 coordinate points is (0.2, 0.2, 0.2), and an eighth coordinate point is (1.8, 1.8, 1.8).

In the method for data processing provided in the embodiments of the disclosure, a Euclidean distance between the any two coordinate points in the point sequence is calculated, an interpolation number is obtained based on the Euclidean distance and a preset density, and an interpolated point sequence is generated based on the interpolation number and the any two coordinate points in the point sequence. Values of a plurality of approximate coordinate points around the any two coordinate points in the original point sequence may be obtained by a linear interpolation, which facilitates searching accurate coordinate points around the coordinate points.

On the basis of the above embodiments, FIG. 4 is a flowchart illustrating a method for data processing provided in embodiments of the present disclosure. Optionally, the multi-dimensional data structure tree is constructed based on the coordinate points in the interpolated point sequence, and includes steps S410 to S420 as illustrated in FIG. 4.

At S410, a median of the coordinate points in the interpolated point sequence is calculated.

It may be understood that, the median of two-dimensional spaces of the coordinate points in the point sequence obtained by interpolating the original point sequence is calculated. A calculation method of the median may be an equation (4):

$$mid^j = \mathrm{mi} d\left( x_1^j + x_2^j + \mathrm{L} + x_m^j \right), \quad j = 1, 2, \mathrm{L}, n \tag{4}$$

where, j represents a dimension, and $mid^j$ represents a medians of all data in a j dimension.

It may be understood that, a median of two dimensions xoy in the original point sequence is calculated, with x as a first dimension, and y as a second dimension.

At S420, the multi-dimensional data structure tree is generated by dividing the coordinate points in the point sequence into two regions based on the median until it is unable to determine a region for the coordinate points in the point sequence.

It may be understood that, on the basis of the above S410, all coordinate points in the original point sequence are divided into two regions based on the calculated median $mid^1$, and all coordinate points in the original point sequence that are smaller than the median are determined as a left region, the coordinate points that are greater than the median are determined as a right region. A median in the left region and a median in the right region continue to be calculated respectively, and the left region and the right region continue to be divided into two regions based on respective medians of the left region and the right region, in which case, an entire original point sequence is divided into four regions. Until it is unable to continue determining clear left and right regions for the coordinate points in the point sequence, the construction of the multi-dimensional data structure tree is completed.

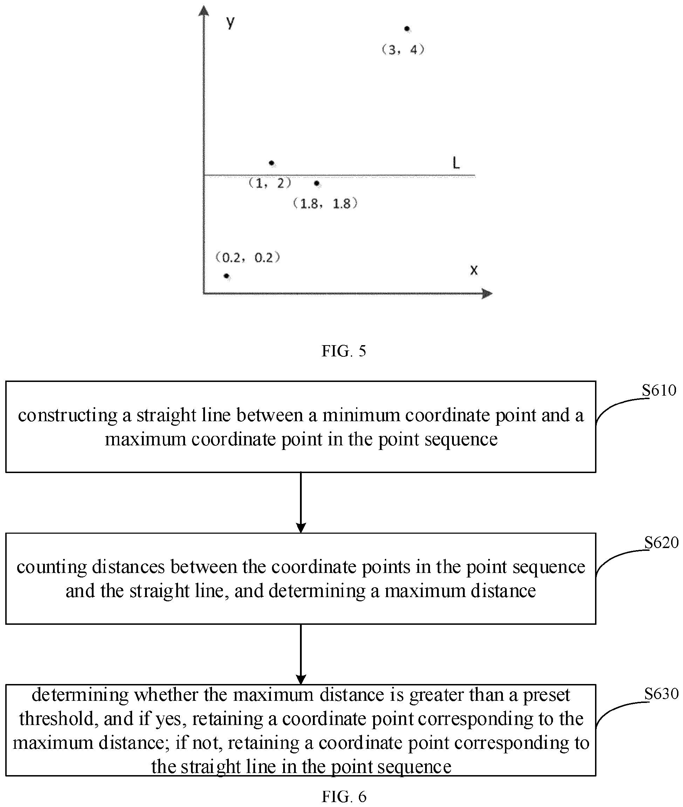

For example, taking FIG. 5 for example, in the xoy two-dimensional space, two-dimensional spaces (0.2, 0.2), (1, 2), (1.8, 1.8) and (3, 4) in the above point sequence are displayed on the xoy plane. When a median in a y dimension is determined as 1.9, (0.2, 0.2) and (1.8, 1.8) that are less than the median of 1.9 are divided into a left region, and (1, 2) and (3, 4) that are greater than the median of 1.9 are divided into a right region, and the left region and the right region are divided by a straight-line segment L.

In the method for data processing provided in the embodiments of the disclosure, a median of the coordinate points in the interpolated point sequence is calculated, the coordinate points in the point sequence are divided into two regions based on the median, and until it is unable to determine a region for the coordinate points in the point sequence, a multi-dimensional data structure tree is generated, which may reduce a calculation data volume and a data search time and accelerate data processing for the convenience of subsequent data search.

On the basis of the above embodiments, FIG. 6 is a flowchart illustrating a method for data processing provided in embodiments of the present disclosure. Optionally, thinning the point sequence includes steps S610 to S630 as illustrated in FIG. 6.

At S610, a straight line between a minimum coordinate point and a maximum coordinate point in the point sequence is constructed.

It may be understood that, all coordinate points in the original point sequence are counted, a start coordinate point of a curve constituted by the coordinate points, that is, a minimum coordinate point, and an end coordinate point, that is, a maximum coordinate point, are determined, and a straight line is connected based on the minimum coordinate point and the maximum coordinate point.

At S620, distances between the coordinate points in the point sequence and the straight line are counted, and a maximum distance is determined.

It may be understood that, the distances between all the coordinate points in the point sequence and the straight line are calculated, the distances corresponding to all the coordinate points are counted, and the maximum distance is determined.

At S630, whether the maximum distance is greater than a preset threshold is determined, and if yes, a coordinate point corresponding to the maximum distance is retained; if not, a coordinate point corresponding to the straight line in the point sequence is retained.

It may be understood that, whether the maximum distance is greater than a preset threshold is determined, and if yes, the coordinate point corresponding to the maximum distance is retained, and a curve constituted by all coordinate points in the original point sequence are divided into two parts by taking the coordinate point as a boundary, and continue repeating the above operations; if not, all coordinates points not on the straight line in the original point sequence are deleted, and only coordinate points on the straight line are retained.

In the method for data processing provided in the embodiments of the disclosure, a straight line between a minimum coordinate point and a maximum coordinate point in the point sequence is constructed, distances between the coordinate points in the point sequence and the straight line are counted, and a maximum distance is determined; and whether the maximum distance is greater than a preset threshold is determined, and if yes, the coordinate point corresponding to the maximum distance is retained; if not, the coordinate point corresponding to the straight line in the point sequence is retained, which may thin a large number of coordinate points included in data and reduce a data volume.

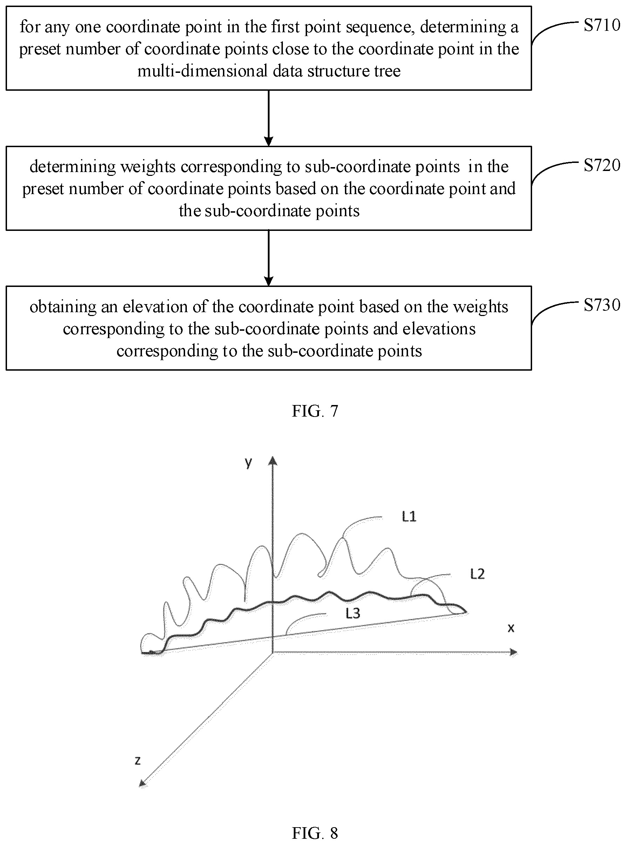

On the basis of the above embodiments, FIG. 7 is a flowchart illustrating a method for data processing provided in embodiments of the present disclosure. Optionally, obtaining the elevations of the first point sequence based on the multi-dimensional data structure tree and the first point sequence includes steps S710 to S730 as illustrated in FIG. 7.

At S710, for any one coordinate point in the first point sequence, a preset number of coordinate points close to the coordinate point are determined in the multi-dimensional data structure tree.

It may be understood that, for any one coordinate point $C(x_0,y_0,z_0)$ in the first point sequence generated by thinning and interpolation, coordinate points of a preset number k close to $C(x_0,y_0,z_0)$ are determined in the multi-dimensional data structure tree obtained by interpolating the original point sequence according to the coordinate point $C(x_0,y_0,z_0)$. The method for interpolating the thinned point sequence is same as the method for directly interpolating the original point sequence, and the above linear interpolation method may be adopted.

At S720, weights corresponding to sub-coordinate points in the preset number of coordinate points are determined based on the coordinate point and the sub-coordinate points.

Optionally, determining the weights corresponding to the sub-coordinate points in the preset number of coordinate points based on the coordinate point and the sub-coordinate points includes: calculating difference values between the coordinate point and the sub-coordinate points in the preset number of coordinate points, and mapping the difference values to weights; and determining the weights corresponding to the sub-coordinate points by normalizing the weights.

It may be understood that, on the basis of the above S710, based on the coordinate points in the first sequence and the preset number of coordinate points corresponding to the coordinate points in the first sequence, sub-coordinate points in the preset number of coordinate points, for example, a value of the preset number may correspond to the above preset density. Preferably, when the preset number is determined as 4, then nearest 4 coordinates are found in the multi-dimensional data structure tree based on $C(x_0,y_0,z_0)$, in which each of the 4 coordinate points may be referred to as a sub-coordinate point; a difference value between $C(x_0,y_0,z_0)$ and a sub-coordinate point $D(x_k,y_k,z_k)$ may be calculated, and a Gaussian kernel function may be adopted to map a difference value between C and D to a weight. Taking an x dimension in the coordinate points C and D for example, a calculation equation of the Gaussian kernel function is the following equation (5):

$$w(x_i) = e^{-\frac{\|x_i - x_0\|^2}{2*\sigma^2}}, \quad i=1, 2, \ldots\ldots, k$$

$$(5)$$

where, $w(x_i)$ is a weight, i is a sequence number in a preset number k of coordinate points, $\sigma$ is a bandwidth parameter, $x_i$ represents a value of a sub-coordinate point searched, and $x_0$ represents a value of any one coordinate point corresponding to the sub-coordinate point in the first sequence.

It may be understood that, a weight corresponding to each sub-coordinate point is determined by normalizing the weights calculated for the preset number of sub-coordinate points and the any one coordinate point. The calculation equation of a normalization processing is the following equation (6):

$$w'\left(x_i\right) = \frac{w\left(x_i\right)}{\sum\limits_{j=1}^{k} w\left(x_j\right)}, \quad i=1, 2,......,k$$

$$(6)$$

where, $w'(x_i)$ represents a weight corresponding to the sub-coordinate point obtained by a normalization processing.

It may be understood that, in the above method for calculating the weight, the greater the difference value between the sub-coordinate point and the any one coordinate point in the first sequence, the smaller the weight. A Gaussian kernel function may be selected to map the difference value into a weight, and the weight decreases with the difference value. Farther points, i.e., sub-coordinate points corresponding to larger differences, have a smaller influence on the elevation of the coordinate point, and a value of the preset number k may further control a maximum difference value between the preset number of coordinate points searched from the K-D tree and the any one coordinate point in the first sequence, which may improve accuracy of calculating an elevation. Further, a bandwidth parameter of the Gaussian kernel function may be adjusted, thereby determining an influence degree of the sub-coordinate point on the elevation of the any one coordinate point.

At S730, an elevation of the coordinate point is obtained based on the weights corresponding to the sub-coordinate points and elevations corresponding to the sub-coordinate points.

Optionally, obtaining the elevation of the coordinate point based on the weights corresponding to the sub-coordinate points and the elevations corresponding to the sub-coordinate points includes: obtaining the elevation of the coordinate point by calculating products of the weights corresponding to the sub-coordinate points and the elevations corresponding to the sub-coordinate points and counting a sum of the products.

It may be understood that, on the basis of S710, the products of the weights corresponding to the sub-coordinate points and the elevations corresponding to the sub-coordinate points are calculated, and the products of all sub-coordinate points are summed to obtain the elevation of any one coordinate point in the first sequence. A calculation equation of the elevation may be the following equation (7):

$$z_0 = \sum_{i=1}^{k} w\left(x_i\right) * z_i, i = 1,2,...,k$$

$$(7)$$

where, $w(x_i)$ represents a weight corresponding to an i-th coordinate point in the preset number of coordinate points, and $z_i$ represents an elevation corresponding to an i-th coordinate point in the multi-dimensional data structure tree.

For example, taking the diagram of the result of data processing in FIG. 8 for example, L1 in FIG. 8 represents a curve constituted by all coordinate points in the original point sequence, L2 represents a curve constituted by coordinate points generated after the original point sequence L1 is processed with the method for data processing provided in embodiments of the present disclosure, and L3 represents a straight line between a start coordinate point and an end coordinate point in the curve L1, and may be regarded as a curve constituted by coordinate points directly thinned by using the current technology.

In the method for data processing provided in the embodiments of the disclosure, for any one coordinate point in the first point sequence, a preset number of coordinate points close to the coordinate point are determined in the multi-dimensional data structure tree, weights corresponding to sub-coordinate points in the preset number of coordinate points are determined based on the coordinate point and the sub-coordinate points, and an elevation of the coordinate point is obtained based on the weights corresponding to the sub-coordinate points and elevations corresponding to the sub-coordinate points, which may calculate elevations of all coordinate points in the first point sequence generated after being processed with thinning and interpolation, thereby retaining features of data that are elevation information in the data to a maximum extent while reducing a data volume, and smoothing the calculated elevation, with simple calculation, a rapid processing speed and high accuracy.

Embodiments of the disclosure further include the following application scenario. In FIG. 1, there is an interaction operation between a terminal 11 and a server 12 in a data processing process, that is, the terminal 11 and the server 12 may perform a data transmission in a data processing process. The following embodiments are illustrated by taking the application scenario for example in combination with the flowchart in FIG. 2.

In an embodiment of a feasible application scenario, the terminal 11 may execute S210 and S220 in FIG. 2 to complete an operation of constructing a multi-dimensional data structure tree, and transmit the obtained point sequence and the constructed multi-dimensional data structure tree to the server 12, and the server 12 receives the data transmitted by the terminal 11, and performs operations of S230 and S240 in FIG. 2, and obtains a first point sequence and elevations of the first point sequence based on the point sequence and the multi-dimensional data structure tree, and the terminal 11 and the server 12 cooperate to complete data processing.

In an embodiment of another feasible application scenario, the terminal 11 may execute S210, S220 and S230 in FIG. 2 to complete construction of a multi-dimensional data structure tree and generation of a first point sequence, and transmit the multi-dimensional data structure tree and the first point sequence to the server 12, and the server 12 receives data transmitted by the terminal 11, and performs an operation of S240 in FIG. 2, and obtains elevations of the first point sequence after data processing based on the received multi-dimensional data structure tree and the first point sequence, and the terminal 11 and the server 12 cooperate to complete data processing .

It may be understood that the methods for constructing the multi-dimensional data structure, generating the first point sequence and obtaining the elevations of the first point sequence specifically included in the embodiments of the above two feasible application scenarios are same as the method for data processing only by using any one device in the terminal 11 or the server 12 in the above embodiments, which will not be repeated here.

Understandably, other scenarios of data transmission may further be included between the terminal 11 and the server 12, which will not be repeated here.

In an application scenario where there is an interaction operation in the data processing process between the terminal 11 and the server 12 provided in embodiments of the present disclosure, for the processed massive data, a processing speed can be accelerated, a processing memory can be reduced, hardware resources can be utilized to a maximum extent, and accuracy of data processing can be ensured. In the process of data transmission, data can further be backed up by the terminal 11 and the server 12 to ensure security of processing data.

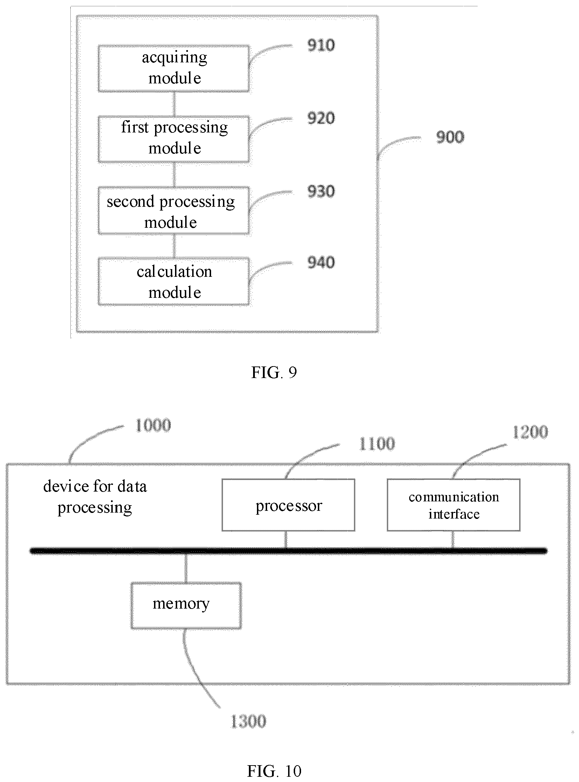

FIG. 9 is a diagram illustrating a structure of an apparatus for data processing provided in embodiments of the present disclosure. The apparatus for data processing provided in embodiments of the disclosure may execute a processing flow provided in method embodiments for data processing. As illustrated in FIG. 9, the apparatus 900 for data processing includes:

an acquiring module 910, configured to acquire a point sequence including a plurality of coordinate points;
a first processing module 920, configured to interpolate the point sequence, and construct a multi-dimensional data structure tree by the interpolated point sequence;
a second processing module 930, configured to obtain a first point sequence by thinning the point sequence and interpolating the thinned point sequence.
a calculation module 940, configured to obtain elevations of the first point sequence based on the multi-dimensional data structure tree and the first point sequence.

Optionally, the first processing module 920 interpolates the point sequence, and constructs the multi-dimensional data structure tree by using the interpolated point sequence, and is specifically configured to:

perform linear interpolation based on the coordinate points in the point sequence; and
construct the multi-dimensional data structure tree based on the coordinate points in the interpolated point sequence.

Optionally, the first processing module 920 performs the linear interpolation based on the coordinate points in the point sequence, and is specifically configured to:

calculate a Euclidean distance between any two coordinate points in the point sequence;
obtain an interpolation number based on the Euclidean distance and a preset density; and
generate an interpolated point sequence based on the interpolation number and the any two coordinate points in the point sequence.

Optionally, the first processing module 920 obtains the interpolation number based on the Euclidean distance and the preset density, and is specifically configured to:
obtain an interpolation number of coordinate points to be interpolated in the point sequence based on a product of the Euclidean distance and the preset density.

Optionally, the first processing module 920 generates the interpolated point sequence based on the interpolation number and the any two coordinate points in the point sequence, and is specifically configured to:

obtain coordinate points to be interpolated corresponding to the interpolation number based on a difference value between the any two coordinate points in the point sequence and the interpolation number; and
generate the interpolated point sequence based on the coordinate points to be interpolated and the coordinate points in the point sequence.

Optionally, the first processing module 920 constructs the multi-dimensional data structure tree based on the coordinate points in the interpolated point sequence, and is specifically configured to:

calculate a median of the coordinate points in the interpolated point sequence; and
generate the multi-dimensional data structure tree by dividing the coordinate points in the point sequence into two regions based on the median until it is unable to determine a region for the coordinate points in the point sequence.

Optionally, the second processing module 930 thins the point sequence, and is specifically configured to:

construct a straight line between a minimum coordinate point and a maximum coordinate point in the point sequence;
count distances between the coordinate points in the point sequence and the straight line, and determine a maximum distance; and
determine whether the maximum distance is greater than a preset threshold, and if yes, retain a coordinate point corresponding to the maximum distance; if not, retain a coordinate point corresponding to the straight line in the point sequence.

Optionally, the calculation module 940 obtains the elevations of the first point sequence based on the multi-dimensional data structure tree and the first point sequence, and is specifically configured to:

for any one coordinate point in the first point sequence, determine a preset number of coordinate points close to the coordinate point in the multi-dimensional data structure tree;
determine weights corresponding to sub-coordinate points in the preset number of coordinate points based on the coordinate point and the sub-coordinate points; and
obtain the elevation of the coordinate point based on the weights corresponding to the sub-coordinate points and elevations corresponding to the sub-coordinate points.

Optionally, the calculation module 940 determines the weights corresponding to the sub-coordinate points in the preset number of coordinate points based on the coordinate point and the sub-coordinate points, and is specifically configured to:

calculate difference values between the coordinate point and the sub-coordinate points in the preset number of coordinate points, and map the difference values to weights; and
determine the weights corresponding to the sub-coordinate points by performing normalization on the weights.

Optionally, the calculation module 940 obtains the elevation of the coordinate point based on the weights corresponding to the sub-coordinate points and the elevations corresponding to the sub-coordinate points, and is specifically configured to:
obtain the elevation of the coordinate point by calculating products of the weights corresponding to the sub-coordinate points and the elevations corresponding to the sub-coordinate points and counting a sum of the products.

The apparatus for data processing in the embodiment of FIG. 9 can be used to perform the technical solution of the method embodiments, and the implementation principle and the technical effect are similar, which will not be repeated here.

FIG. 10 is a diagram illustrating a structure of a device for data processing provided in embodiments of the present disclosure. The device for data processing may be the above server or the terminal. The device for data processing provided in embodiments of the disclosure may execute the processing flow provided in the method embodiments for data processing. As illustrated in FIG. 10, the device 1000 for data processing includes a processor 1100, a communication interface 1200 and a memory 1300. A computer program stored in the memory is configured to perform the method for data processing when executed by the processor 100.

In addition, a computer-readable storage medium having a computer program stored thereon is further provided in embodiments of the present disclosure. The computer program is executed by a processor to implement steps of the method for data processing.

In addition, a computer program product is further provided in embodiments of the disclosure. The computer program product includes a computer program or an instruction. The computer program or instruction is configured to implement the method for data processing provided in the above any embodiment when executed by a processor.

It should be noted that relational terms such as "first" and "second" are used herein to distinguish one entity or operation from another entity or operation without necessarily requiring or implying any such actual relationship or order between such entities or operations. And, the terms "comprise", "include" or any other variations thereof, are intended to cover a non-exclusive inclusion, such that a process, a method, an article or a device including a series of elements not only includes those elements but also includes other elements not expressly listed, or may further include elements inherent to such process, method, article, or device. In the absence of more constraints, the elements defined by a sentence "comprise a" do not preclude the presence of additional same elements in the process, method, article, or apparatus that includes the elements.

The foregoing is merely the specific embodiments of the present disclosure, so that those skilled in the art may understand or implement the present disclosure. Various modifications to the embodiments will be apparent to those skilled in the art, and general principles defined herein may be implemented in other embodiments without departing from the spirit or scope of the disclosure. Therefore, the present disclosure may not be limited to the embodiments described herein, but conform to the widest scope consistent with principles and novel features disclosed herein.

**Claims**

1. A method for data processing, comprising:

   acquiring a point sequence comprising a plurality of coordinate points;
   interpolating the point sequence, and constructing a multi-dimensional data structure tree by using the interpolated point sequence;
   obtaining a first point sequence by thinning the point sequence and interpolating the thinned point sequence; and
   obtaining elevations of the first point sequence based on the multi-dimensional data structure tree and the first point sequence.

2. The method according to claim 1, wherein interpolating the point sequence, and constructing the multi-dimensional data structure tree by using the interpolated point sequence comprises:

   performing linear interpolation based on the coordinate points in the point sequence; and
   constructing the multi-dimensional data structure tree based on the coordinate points in the interpolated point sequence.

3. The method according to claim 2, wherein performing linear interpolation based on the coordinate points in the point sequence comprises:

   calculating a Euclidean distance between any two coordinate points in the point sequence;
   obtaining an interpolation number based on the Euclidean distance and a preset density; and
   generating the interpolated point sequence based on the interpolation number and the any two coordinate points in the point sequence.

4. The method according to claim 3, wherein obtaining the interpolation number based on the Euclidean distance and the preset density comprises:
   obtaining an interpolation number of coordinate points to be interpolated in the point sequence based on a product of the Euclidean distance and the preset density.

5. The method according to claim 3, wherein generating the interpolated point sequence based on the interpolation number and the any two coordinate points in the point sequence comprises:

   obtaining coordinate points to be interpolated corresponding to the interpolation number based on a difference value between the any two coordinate points in the point sequence and the interpolation number; and

generating the interpolated point sequence based on the coordinate points to be interpolated and the coordinate points in the point sequence.

6. The method according to claim 2, wherein constructing the multi-dimensional data structure tree based on the coordinate points in the interpolated point sequence comprises:

   calculating a median of the coordinate points in the interpolated point sequence; and
   generating the multi-dimensional data structure tree by dividing the coordinate points in the point sequence into two regions based on the median until it is unable to determine a region for the coordinate points in the point sequence.

7. The method according to claim 1, wherein thinning the point sequence specifically comprises:

   constructing a straight line between a minimum coordinate point and a maximum coordinate point in the point sequence;
   counting distances between the coordinate points in the point sequence and the straight line, and determining a maximum distance; and
   determining whether the maximum distance is greater than a preset threshold, and if yes, retaining a coordinate point corresponding to the maximum distance; if not, retaining a coordinate point corresponding to the straight line in the point sequence.

8. The method according to claim 1, wherein obtaining the elevations of the first point sequence based on the multi-dimensional data structure tree and the first point sequence comprises:

   for any one coordinate point in the first point sequence, determining a preset number of coordinate points close to the coordinate point in the multi-dimensional data structure tree;
   determining weights corresponding to sub-coordinate points in the preset number of coordinate points based on the coordinate point and the sub-coordinate points; and
   obtaining an elevation of the coordinate point based on the weights corresponding to the sub-coordinate points and elevations corresponding to the sub-coordinate points.

9. The method according to claim 8, wherein determining the weights corresponding to the sub-coordinate points in the preset number of coordinate points based on the coordinate point and the sub-coordinate points comprises:

   calculating difference values between the coordinate point and the sub-coordinate points in the preset number of coordinate points, and mapping the difference values to weights; and
   determining the weights corresponding to the sub-coordinate points by performing normalization on the weights.

10. The method according to claim 8, wherein obtaining the elevation of the coordinate point based on the weights corresponding to the sub-coordinate points and the elevations corresponding to the sub-coordinate points comprises: obtaining the elevation of the coordinate point by calculating products of the weights corresponding to the sub-coordinate points and the elevations corresponding to the sub-coordinate points and counting a sum of the products.

11. An apparatus for data processing, comprising:

   an acquiring module, configured to acquire a point sequence comprising a plurality of coordinate points;
   a first processing module, configured to interpolate the point sequence, and construct a multi-dimensional data structure tree by using the interpolated point sequence;
   a second processing module, configured to obtain a first point sequence by thinning the point sequence and interpolating the thinned point sequence; and
   a calculation module, configured to obtain elevations of the first point sequence based on the multi-dimensional data structure tree and the first point sequence.

12. The apparatus according to claim 11, wherein the first processing module is specifically configured to: perform linear interpolation based on the coordinate points in the point sequence; and construct the multi-dimensional data structure tree based on the coordinate points in the interpolated point sequence.

13. The apparatus according to claim 11, wherein the second processing module is specifically configured to: construct a straight line between a minimum coordinate point and a maximum coordinate point in the point sequence; count distances between the coordinate points in the point sequence and the straight line, and determine a maximum distance; and determine whether the maximum distance is greater than a preset threshold, and if yes, retain a coordinate point corresponding to the maximum distance; if not, retain a coordinate point corresponding to the straight line in the point sequence.

14. A device for data processing, comprising:

a memory;
a processor; and
a computer program stored in the memory;
wherein the computer program is configured to be executed by the processor to implement steps of:

acquiring a point sequence comprising a plurality of coordinate points;
interpolating the point sequence, and constructing a multi-dimensional data structure tree by using the interpolated point sequence;
obtaining a first point sequence by thinning the point sequence and interpolating the thinned point sequence; and
obtaining elevations of the first point sequence based on the multi-dimensional data structure tree and the first point sequence.

15. A computer-readable storage medium having a computer program stored thereon, wherein the computer program is executed by a processor to implement steps of:

acquiring a point sequence comprising a plurality of coordinate points;
interpolating the point sequence, and constructing a multi-dimensional data structure tree by using the interpolated point sequence;
obtaining a first point sequence by thinning the point sequence and interpolating the thinned point sequence; and
obtaining elevations of the first point sequence based on the multi-dimensional data structure tree and the first point sequence.

16. A computer program product comprising instructions, wherein when the instructions are executed by a processor of an electronic device, the electronic device is caused to perform steps of

acquiring a point sequence comprising a plurality of coordinate points;
interpolating the point sequence, and constructing a multi-dimensional data structure tree by using the interpolated point sequence;
obtaining a first point sequence by thinning the point sequence and interpolating the thinned point sequence; and
obtaining elevations of the first point sequence based on the multi-dimensional data structure tree and the first point sequence.

FIG. 1

FIG. 2

calculating a Euclidean distance between any two coordinate points in the point sequence _S310

obtaining an interpolation number based on the Euclidean distance and a preset density _S320

generating the interpolated point sequence based on the interpolation number and the any two coordinate points in the point sequence _S330

FIG. 3

calculating a median of the coordinate points in the interpolated point sequence _S410

generating the multi-dimensional data structure tree by dividing the coordinate points in the point sequence into two regions based on the median until it is unable to determine a region for the coordinate points in the point sequence _S420

FIG. 4

y

• (3, 4)

L
• (1, 2)  •
(1.8, 1.8)

(0.2, 0.2)
•

x

FIG. 5

| constructing a straight line between a minimum coordinate point and a maximum coordinate point in the point sequence | S610 |

| counting distances between the coordinate points in the point sequence and the straight line, and determining a maximum distance | S620 |

| determining whether the maximum distance is greater than a preset threshold, and if yes, retaining a coordinate point corresponding to the maximum distance; if not, retaining a coordinate point corresponding to the straight line in the point sequence | S630 |

FIG. 6

for any one coordinate point in the first point sequence, determining a preset number of coordinate points close to the coordinate point in the multi-dimensional data structure tree — S710

determining weights corresponding to sub-coordinate points in the preset number of coordinate points based on the coordinate point and the sub-coordinate points — S720

obtaining an elevation of the coordinate point based on the weights corresponding to the sub-coordinate points and elevations corresponding to the sub-coordinate points — S730

FIG. 7

FIG. 8

acquiring module 910

first processing module 920

second processing module 930

calculation module 940

900

FIG. 9

device for data processing 1000

processor 1100

communication interface 1200

memory

1300

FIG. 10

## INTERNATIONAL SEARCH REPORT

| | International application No. |
|---|---|
| | **PCT/CN2022/077533** |

**A. CLASSIFICATION OF SUBJECT MATTER**

G06F 16/29(2019.01)i

According to International Patent Classification (IPC) or to both national classification and IPC

**B. FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNTXT ENTXT ENTXTC DWPI CNKI: 坐标, 点序列, 插值, 多维数据结构树, KD树, 抽稀, 直线, 权重, coordinate, point sequence, interpolation, multi-dimensional data structure tree, K-dimensional tree, thinning, straight line, weight

**C. DOCUMENTS CONSIDERED TO BE RELEVANT**

| Category* | Citation of document, with indication, where appropriate, of the relevant passages | Relevant to claim No. |
|---|---|---|
| PX | CN 113239136 A (BEIJING CHJ INFORMATION TECHNOLOGY CO., LTD.) 10 August 2021 (2021-08-10)<br>claims 1-15, description, paragraph 175 | 1-16 |
| Y | 李春晓等 (LI, Chunxiao et al.). "基于机载LiDAR数据提取城区数字高程模型 (Non-official translation: Extraction of Urban Digital Elevation Model Based on Airborne LiDAR Data)" 测绘技术装备 (Geomatics Technology and Equipment),<br>No. 04, 25 December 2016 (2016-12-25),<br>pp. 84-85 | 1-16 |
| Y | CN 112465948 A (SHANDONG UNIVERSITY OF SCIENCE AND TECHNOLOGY) 09 March 2021 (2021-03-09)<br>description, paragraphs 7-25 | 1-16 |
| A | CN 110660133 A (BAIDU ONLINE NETWORK TECHNOLOGY (BEIJING) CO., LTD.) 07 January 2020 (2020-01-07)<br>entire document | 1-16 |
| A | CN 111340723 A (WUHAN UNIVERSITY) 26 June 2020 (2020-06-26)<br>entire document | 1-16 |

☐ Further documents are listed in the continuation of Box C.    ☑ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **27 April 2022** | **06 May 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/077533**

| Patent document cited in search report | | | Publication date (day/month/year) | Patent family member(s) | | | Publication date (day/month/year) |
|---|---|---|---|---|---|---|---|
| CN | 113239136 | A | 10 August 2021 | None | | | |
| CN | 112465948 | A | 09 March 2021 | None | | | |
| CN | 110660133 | A | 07 January 2020 | None | | | |
| CN | 111340723 | A | 26 June 2020 | CN | 111340723 | B | 15 April 2022 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110536213